Europäisches Patentamt

European Patent Office

Office européen des brevets

(19)

(11) Veröffentlichungsnummer : **0 072 941**
**B1**

(12) **EUROPÄISCHE PATENTSCHRIFT**

(45) Veröffentlichungstag der Patentschrift :
**30.12.86**

(21) Anmeldenummer : **82107065.3**

(22) Anmeldetag : **04.08.82**

(51) Int. Cl.⁴ : **B 23 K 9/20**, B 23 C 3/12,
B 25 B 29/02, C 21 D 7/02

(54) **Verfahren und Vorrichtung zum Bolzenschweissen.**

(30) Priorität : **05.08.81 DE 3131055**

(43) Veröffentlichungstag der Anmeldung :
**02.03.83 Patentblatt 83/09**

(45) Bekanntmachung des Hinweises auf die Patenterteilung : **30.12.86 Patentblatt 86/52**

(84) Benannte Vertragsstaaten :
**FR GB IT**

(56) Entgegenhaltungen :
DE-A- 2 108 480
DE-A- 2 643 045
DE-C-    14 379
DE-C-    200 547
DE-C-    468 044
DE-C-    524 949
DE-C- 1 188 107
DE-U- 1 853 996
DE-U- 1 864 203
DE-U- 2 749 809
GB-A-    837 411
US-A- 1 437 831
US-A- 3 182 173

(73) Patentinhaber : **Max-Planck-Gesellschaft zur Förderung der Wissenschaften e.v.
Bunsenstrasse 10
D-3400 Göttingen (DE)**

(72) Erfinder : **Kotzlowski, Heinz Ernst
Moarstrasse 18
D-8045 Ismaning (DE)**

(74) Vertreter : **von Bezold, Dieter, Dr. et al
Patentanwälte Dr. D. von Bezold, Dipl.-Ing. P. Schütz,
Dipl.-Ing. W. Heusler Maria-Theresia-Strasse 22 Postfach 86 02 60
D-8000 München 86 (DE)**

## Beschreibung

Die vorliegende Erfindung betrifft ein Verfahren zum Bolzenschweißen, bei dem ein Bolzen, der am anzuschweißenden Ende seinen größten Durchmesser hat, mit diesem Ende an einer Oberfläche eines Werkstückes durch Schmelzschweißen angeschweißt wird, wobei ein Schweißwulst entsteht, der anschließend mit einem Schneidwerkzeug entfernt wird, wobei auch eine äußere Schicht des angeschweißten Endes des Bolzens entfernt wird. Ferner betrifft die Erfindung eine Vorrichtung zur Durchführung dieses Verfahrens.

Aus US-A-31 82 173 ist eine Lichtbogen-Schweißvorrichtung zum stumpfen Anschmelzen eines Bolzens, dessen anzuschweißende Ende einen scheibenartigen Flansch größeren Durchmessers als der eigentliche Bolzen aufweist, bekannt, bei der der anzuschweißende Bolzen in einem Rohr geführt ist, über dessen vorderes Ende ein Keramikzylinder vorspringt, welcher auf die Fläche, an der der Bolzen anzuschweißen ist, aufgesetzt wird und die radiale Ausbreitung des beim Anschmelzen entstehenden Schweißbades begrenzt.

Schweißbolzen, die am anzuschweißenden Ende ihren größten Durchmesser aufweisen, sind auch aus DE-A-26 43 045 bekannt.

Aus DE-A-21 08 480 ist ferner eine Vorrichtung zum Stumpfschweißen metallischer Werkstücke bekannt, bei der die Werkstücke zwischen sich gegenüberstehenden, geteilten Spannbacken, die gleichzeitig als Stromzuführung dienen, angeordnet sind und bei der die Werkstücke während des Schweißvorganges mittels der Spannbacken gegeneinander gestaucht werden. Konzentrisch um die Spannbacken sind von diesen getrennte geteilte Scherbacken zum Abtrennen und Aufbrechen des Schweißgrates angeordnet.

Es ist ferner ein Lichtbogen-Schweißverfahren zum stumpfen Anschmelzen von Schraubenbolzen und dergl. an einer Fläche bekannt, bei der der anzuschweißende Bolzen in eine Elektroschweißpistole eingesetzt und sein anzuschweißendes Ende mit einem Keramikring umgeben wird. Nachdem die Pistole und die Fläche, mit der der Bolzen zu verschweißen ist, mit den Anschlüssen einer Schweißstromquelle verbunden worden sind, wird der Bolzen mittels der Pistole auf die Fläche aufgesetzt und wieder abgehoben, wobei ein Lichtbogen zwischen dem Bolzen und der Fläche entsteht, der das Bolzenende und das Grundmaterial der Fläche schmilzt. Der Bolzen wird dann in das flüssige Schmelzbad getaucht, der Strom abgeschaltet und schließlich werden die Schweißpistole sowie der Keramikring entfernt.

Durch den Keramikring wird zwar der Schweißwulst begrenzt, trotzdem muß dieser Wulst bei manchen Anwendungen, z. B. bei Vakuumapparaturen und im chemischen Apparatebau, vor allem aber auch aus Sicherheitsgründen, entfernt werden. Schweißfehler treten nämlich bevorzugt im Randbereich der Schweißung auf und werden daher durch das Entfernen des Schweißwulstes im allgemeinen sichtbar.

Aus GB-A-837 411 ist ein Verfahren zum Bogenschweißen bekannt, bei welchem ein Bolzen mit verdicktem Anschweißende durch Lichtbogenschweißung stumpf mit einer Platte verschweißt wird. Der beim Anschweißen entstehende Schweißwulst wird anschließend mit einem rotierenden ringförmigen Werkzeug entfernt, wobei auch eine äußere Schicht des angeschweißten Endes des Bolzens entfernt und in der Platte eine das angeschweißte Ende des Bolzens umgebende flache, ringförmige Auskehlung gebildet wird.

Aus DE-A-524 949 ist ein Fräserkopf mit durch Plangewinde in radialer Richtung einstellbaren Messern bekannt, der am einen Ende einen konusförmigen Schaft zum Verbinden mit einem Drehantrieb und am anderen Ende eine axiale Ausnehmung aufweist, um die die Messer (Drehmeißel) symmetrisch angeordnet sind. Dieser Fräserkopf ist jedoch nicht für das Abfräsen eines Schweißwulstes, der das angeschweißte Ende eines Bolzens umgibt, bestimmt und auch nicht hierfür geeignet, da die Schneiden der Messer nach außen weisen und die axiale Ausnehmung eine für die Aufnahme eines Bolzens zu geringe Tiefe hat.

Aus DE-C-14 379 ist eine Vorrichtung zum Nachdrehen der Achsschenkel an Wagenrädern bekannt, die eine zum Einspannen eines Schneidstahles dienende Spannscheibe mit einer Nabe zum Aufschieben auf den zu bearbeitenden Achsschenkel enthält. Die Nabe wird auf dem Achsschenkel durch Muffen geeigneten Innen- und Außendurchmessers zentriert.

Aus DE-C-200 547 ist eine Vorrichtung zum Abfräsen von Ventilkegeln mittels Hohlfräser und einer in einem verstellbaren Führungsstück federnd gelagerten Antriebsspindel bekannt, bei der Führungsstücke mit Bohrungen verschiedener Durchmesser zur Führung von Ventilspindeln verschiedener Außendurchmesser vorgesehen sind.

Aus DE-U-18 64 203 ist ein zur Entfernung von Schweißraupen an Rohren dienendes Werkzeug mit einem Tragkörper bekannt, der einen Befestigungskonus und zwei radial verstellbare Backen aufweist, die an ihrer äußeren Stirnseite eine Fräsverzahnung haben. Dadurch, daß die Backen radial verstellbar sind, kann dieses Werkzeug für Rohre verschiedener Durchmesser verwendet werden.

Aus US-A-14 37 831 ist eine Maschine zum Abdrehen von Ventilkegeln bekannt, bei der der Schaft des abzudrehenden Ventilkegels in einer Buchse gelagert ist. Für Ventile mit Spindeln unterschiedlicher Durchmesser werden auswechselbare Buchsen mit entsprechend bemessener Bohrung verwendet.

Die vorliegende Erfindung löst die Aufgabe, die Sicherheit und Festigkeit von angeschweißten Bolzen weiter zu erhöhen durch die Kombination der Maßnahmen, daß die Entfernung des Schweißwulstes mit einem mehrschneidigen, vom angeschweißten Bolzen zentrisch geführten Fräswerkzeug erfolgt und daß der angeschweißte Bolzen einer zur Kaltreckung ausreichenden Zugbelastung entlang der Bolzenachse ausgesetzt wird.

Durch das genaue zentrische Abfräsen und die anschließende Kaltreckung werden einerseits etwaige Fehler mit Sicherheit erkannt und andererseits die Festigkeit von fehlerfrei angeschweißten Bolzen erhöht.

Eine Vorrichtung zum Entfernen eines Schweißwulstes für das Verfahren nach Anspruch 1 enthält einen Körper, der am einen Ende einen Einspannschaft zum Verbinden mit einem Drehantrieb und am anderen Ende eine mittige, axiale Ausnehmung sowie mehrere, symmetrisch um die Ausnehmung angeordnete Drehmeißel aufweist und ist dadurch gekennzeichnet, daß die Drehmeißel unter einem Winkel von 75° zur Drehachse verlaufen, am inneren Ende eine zur Drehachse im wesentlichen parallele Kante aufweisen und eine abgerundete Vorderkante zum Abfräsen des Schweißwulstes haben.

Eine im Anspruch 3 angegebene vorteilhafte Ausgestaltung dieser Vorrichtung ist dadurch gekennzeichnet, daß in die Ausnehmung Einsätze verschiedener Innendurchmesser einsetzbar sind, die mit geringem Spiel auf Bolzen entsprechender Durchmesser passen und den Körper bezüglich des Bolzens zentrieren.

Die Vorrichtungen gemäß Anspruch 2 und 3 haben den Vorteil, daß eine exakte zentrische Führung des Fräswerkzeuges mit Sicherheit gewährleistet ist, so daß als Drehantrieb auch eine Handbohrmaschine verwendet werden kann, was z. B. bei großen und schlecht zugänglichen Werkstücken, von Vorteil ist.

Die Vorrichtung gemäß Anspruch 3 eignet sich besonders für Bolzen mit bis zum Wulst reichendem Gewinde, da hier der Einsatz die Zentrierung übernimmt, so daß keine Gefahr besteht, daß das Gewinde durch die Drehmeißel beschädigt wird.

Im folgenden wird ein Ausführungsbeispiel der Erfindung unter Bezugnahme auf die Zeichnung näher erläutert.

Die Figuren 1 bis 5 zeigen das Anschweißen eines Bolzens an einer Platte und das Entfernen eines dabei entstehenden Schweißwulstes gemäß einer bevorzugten Ausführungsform des vorliegenden Verfahrens, wobei in Figur 4 eine vorteilhafte Vorrichtung zum Entfernen des Schweißwulstes dargestellt ist ; und

Figur 6 zeigt eine vorteilhafte Vorrichtung zum Prüfen und ggf. Recken des angeschweißten Bolzens.

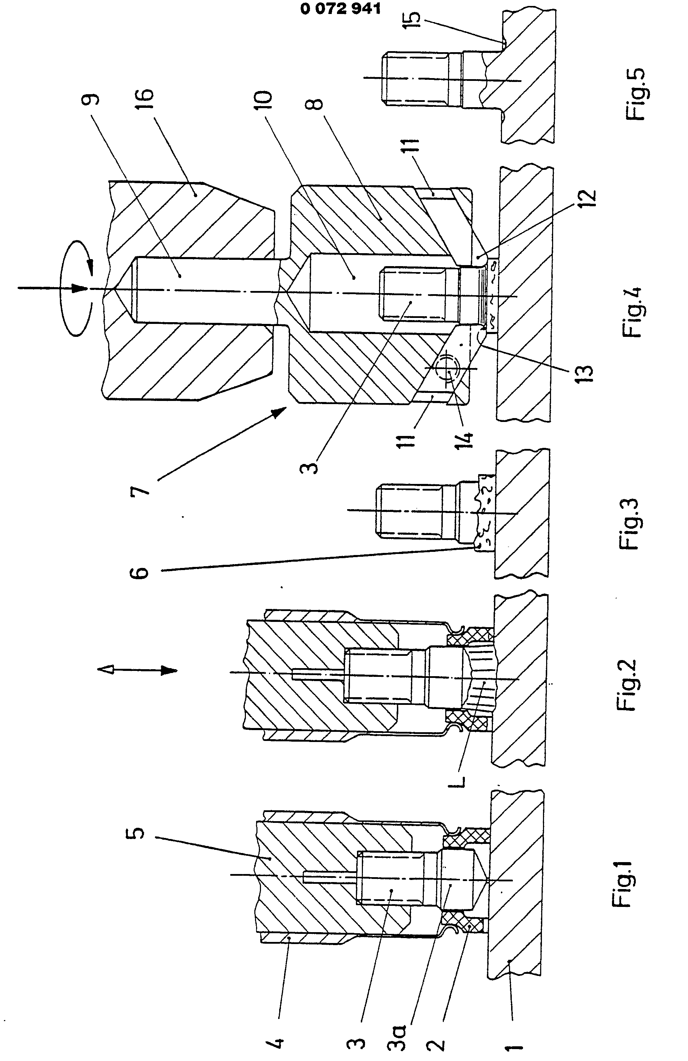

Wie Figur 1 zeigt, wird ein an einer Metallplatte 1 anzuschweißender Schraubenbolzen 3, dessen anzuschweißender Teil einen größeren Durchmesser aufweist, als der übrige Teil, mit einem Keramikring 2 umgeben und in ein Spannfutter einer Schweißpistole 5 eingespannt, die mit einem Keramikring-Halter 4 versehen ist. Die Schweißpistole 5 und das Werkstück 1 sind mit einer nichtdargestellten Schweißstromquelle, z. B. einem üblichen Schweißtransformator, verbunden. Der anzuschweißende Teil soll im allgemeinen mindestens 1 mm dicker sein als der des Bolzens. Der Bolzen wird mit seinem kegelförmig zulaufenden, anzuschweißenden Ende auf das Werkstück 1 aufgesetzt, wie Figur 1 zeigt, und dann abgehoben, wobei zwischen dem Werkstück 1 und dem Bolzen 3 im Keramikring 2 ein Lichtbogen L entsteht (Fig. 2), der das Bolzenende und das Werkstück anschmilzt. Der Bolzen wird dann in das flüssige Schmelzbad gedrückt, der Schweißstrom wird abgestellt und die Pistole sowie der Keramikring werden dann entfernt. Der verbleibende, angeschweißte Bolzen ist in Fig. 3 dargestellt, er weist an der Schweißstelle einen Schweißwulst 6 auf. Wie Fig. 4 zeigt, wird dieser Schweißwulst durch ein Fräswerkzeug 7 entfernt, welches z. B. in das Spannfutter 8 einer Handbohrmaschine (nicht dargestellt) eingespannt ist.

Das dargestellte Fräswerkzeug 7 hat einen zylinderförmigen Körper 8 mit einem Einspannschaft 9. Der zylinderförmige Körper 8 hat zwei schlitzförmige Ausnehmungen 11, die schräg, z. B. unter einem Winkel von 75° zur Drehachse verlaufen und jeweils einen Drehmeißel 12 enthalten, der vorzugsweise eine Hartmetallschneide aufweist. Die Schneide bildet eine abgerundete Vorderkante 13, durch die der Schweißwulst 6 abgedreht oder abgefräst wird. Der Abstand der einander gegenüberliegenden Schneiden ist vorzugsweise so gewählt, daß auch der etwas dicker bemessene untere Teil 3a des Bolzens etwas abgeschält wird. Die Fräsung kann bis etwas in die Grundplatte 1 hineinragen, so daß diese dort eine kleine ringförmige Mulde 15 erhält.

Nach dem Entfernen des Schweißwulstes ist eine visuelle Inspektion der Schweißnaht möglich, so daß Bindefehler, die bevorzugt im Randbereich der Schweißnaht auftreten, im allgemeinen erkennbar sind. Durch das Abschälen des Bolzens können Spannungskonzentrationen im Schweißbereich vermieden werden.

Die Führung und Zentrierung des Fräswerkzeuges 7 kann durch den Bolzen 3 selbst erfolgen. Hierzu kann die den Bolzen aufnehmende mittige Ausnehmung 15 im Fräswerkzeug so bemessen werden, daß sie mit geringem Spiel auf den Bolzen paßt. Für Bolzen verschiedener Durchmesser können Einsätze verschiedener Innendurchmesser für die Ausnehmung 10 vorgesehen sein (nicht dargestellt). Die Drehmeißel sind in den Schlitzen radial verstellbar und durch Stellschrauben 14 fixierbar.

Anstelle der dargestellten zwei einander gegenüberliegenden Drehmeißel können selbstverständlich auch drei Drehmeißel, die in Abständen von 120° bezüglich der Drehachse angeordnet sind oder irgend eine andere Anzahl von bezüglich der Drehachsen symmetrisch angeordneter Drehmeißel verwendet werden.

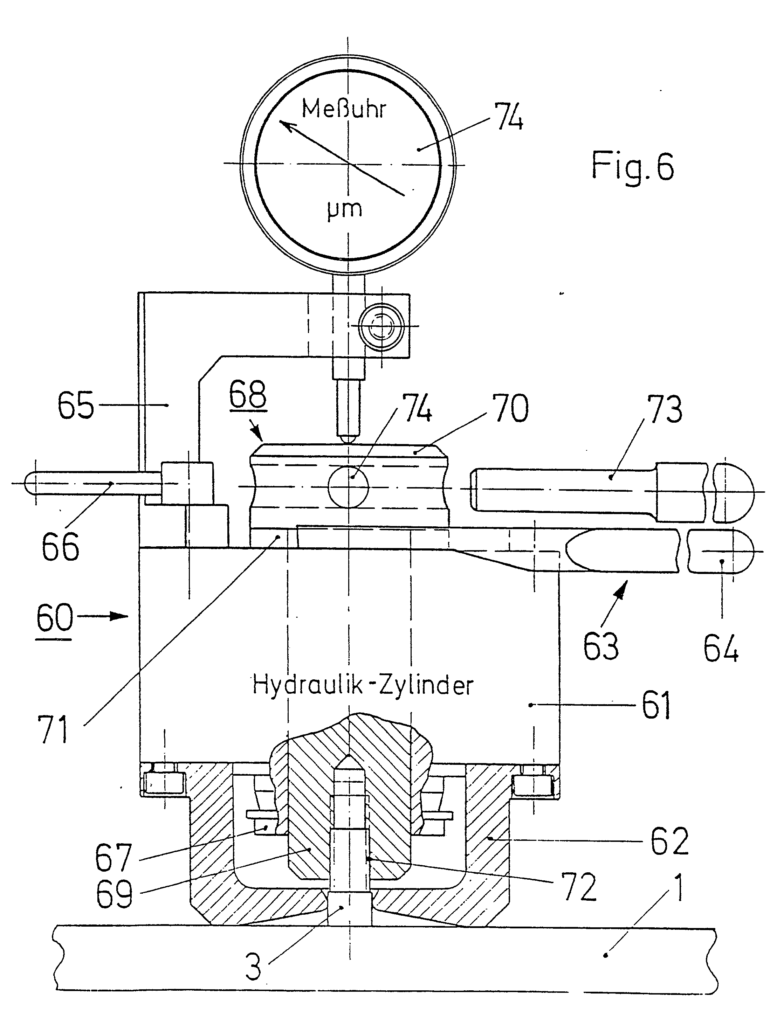

Eine weitere Erhöhung der Sicherheit und gewünschtenfalls auch der Festigkeit der stumpf angeschweißten Bolzen wird gemäß einer Weiterbildung der Erfindung durch eine anschließende Zugprüfung bzw. Kaltreckung erreicht. Hierzu kann die in Figur 6 dargestellte Zugprüf- und Reckvorrichtung 60 dienen.

Die Vorrichtung 60 enthält einen Hydraulikzylinder 61, der z. B. für einen Druck von 1 000 bar ausgelegt ist. Unten am Hydraulikzylinder sind ein Stütztopf 62, oben eine Gabel 63 mit einem Griff 64 angeschraubt. An der Oberseite des Hydraulikzylinders 61 ist ferner eine Meßuhrhalterung 65 über einem Klemmknebel 66 lösbar befestigt. Der Hydraulikzylinder 61 enthält einen Kolben 67 mit einer axialen Bohrung, in die ein Zugbolzen 68 eingesetzt ist. Der Zugbolzen 68 hat einen Schaft 69, der sich durch die Bohrung des Kolbens 67 erstreckt, und einen Kopf 70 vergrößerten Durchmessers, der über eine zwischengelegte Scheibe 71 auf dem oberen Ende des Kolbens 67 ruht.

Die oben beschriebene Zugprüf- und Reckvorrichtung 60 wird wie folgt verwendet :

Nachdem ein Bolzen 3 am Werkstück 1 angeschweißt und der Schweißwulst entfernt worden ist, wie es oben anhand der Figuren 1 bis 5 erläutert wurde, setzt man den Hydraulikzylinder 61 mit dem Stütztopf 62 auf den zu prüfenden Bolzen 3. Die Meßuhrhalterung 65 ist dabei noch nicht aufgesetzt. Nun wird der Zugbolzen 68 von oben in die Bohrung des Hydraulikkolbens 67 eingesetzt und mit einem unten im Schaft 69 vorgesehenen Gewindeloch 72 auf den Bolzen 3 aufgeschraubt, was mittels eines Hebels 73 erfolgt, der in ein Loch 74 im Kopf 70 des Zugbolzens 68 gesteckt wird. Anschließend wird die Meßuhrhalterung 65, an der sich eine Meßuhr 74 befindet, aufgesetzt und mit dem Knebel 66 festgeklemmt. In den Hydraulikzylinder 61 wird nun ein Druckmittel eingeleitet (nicht dargestellt) wodurch der Kolben 67 nach oben gedrückt und eine entsprechende Zugkraft über die Scheibe 71 und den Zugbolzen 68 auf den Schraubenbolzen 3 ausgeübt wird. Das Ausmaß der dabei auftretenden plastischen Verformung (Reckung) kann an der Meßuhr 74 abgelesen werden. Nach der Zugprüfung und/oder Reckung des Schraubenbolzens 3 wird die Vorrichtung 70 wieder entfernt, indem der Zugbolzen 68 vom Schraubenbolzen 3 abgeschraubt und die Vorrichtung entfernt wird.

An die Stelle der Vorrichtung aus dem Hydraulikzylinder 61 und dem Kolben 67 kann auch eine andere, z. B. mechanisch oder pneumatisch betätigte Vorrichtung zum Erzeugen einer Kraft zwischen dem Zugbolzen 68 und dem Werkstück 1 verwendet werden.

**Patentansprüche**

1. Verfahren zum Bolzenschweißen, bei dem ein Bolzen, der an seinem anzuschweißenden Ende seinen größten Durchmesser hat, mit diesem Ende an einer Oberfläche eines Werkstücks (1) durch Schmelzschweißen angeschweißt wird, wobei ein Schweißwulst (6) entsteht, der anschließend mit einem Schneidwerkzeug entfernt wird, wobei auch eine äußere Schicht des angeschweißten Endes (3a) des Bolzens entfernt wird, gekennzeichnet durch die Kombination der Maßnahmen, daß die Entfernung des Schweißwulstes (6) mit einem mehrschneidigen, vom angeschweißten Bolzen (3) zentrisch geführten Fräswerkzeug (7) erfolgt und daß der angeschweißte Bolzen (3) einer zur Kaltreckung ausreichenden Zugbelastung entlang der Bolzenachse ausgesetzt wird.

2. Vorrichtung zum Entfernen eines Schweißwulstes für das Verfahren nach Anspruch 1, mit einem Körper (8), der am einen Ende einen Einspannschaft (9) zum Verbinden mit einem Drehantrieb und am anderen Ende eine mittige, axiale Ausnehmung (10) sowie mehrere, symmetrisch um die Ausnehmung (10) angeordnete Drehmeißel (12) aufweist, dadurch gekennzeichnet daß die Drehmeißel (12) unter einem Winkel von 75° zur Drehachse verlaufen, am inneren Ende eine zur Drehachse im wesentlichen parallele Kante aufweisen und eine abgerundete Vorderkante (13) zum Abfräsen des Schweißwulstes (6) haben.

3. Vorrichtung nach Anspruch 2, dadurch gekennzeichnet, daß in die Ausnehmung Einsätze verschiedener Innendurchmesser einsetzbar sind, die mit geringem Spiel auf Bolzen entsprechender Durchmesser passen und den Körper bezüglich des Bolzens zentrieren.

**Claims**

1. Method of stud welding in which a stud, which has its greatest diameter at the end to be welded, is welded at the said end to a surface of a workpiece (1) by fusion welding, whereby a weld bead (6) is produced which is subsequently removed with a cutting tool and an outer layer of the welded end (3a) of the stud is removed also, characterised by the combination of the features that the removal of the weld bead (6) is effected with a multiple cutter milling tool (7) centrally guided by the welded stud (3) and that the welded stud (3) is subjected to a tensional load along the stud axis sufficient for cold drawing.

2. Apparatus for removing a weld bead for the method as claimed in claim 1 with a body (8) which at one end has a clamping shaft (9) for connection with a rotary drive and at the other end has a central, axial recess (10) and a plurality of turning tools (12) disposed symmetrically about the recess (10), characterised in that the turning tools (12) extend at an angle of 75° to the axis of rotation, at the inner end have an edge substantially parallel to the axis of rotation and a rounded front edge (13) for milling away the weld bead (6).

3. Apparatus as claimed in claim 2, characterised in that inserts of differing internal diameter are insertable into the recess, which inserts pass with a small clearance onto studs of corresponding diameter and centre the body with respect to the stud.

**Revendications**

1. Procédé de soudage de goujons par lequel un goujon dont l'extrémité à souder présente le plus grand diamètre, est soudé par fusion, par cette extrémité, à la surface d'une pièce (1), ce qui donne lieu à un cordon (6) que l'on élimine ensuite, de même qu'une couche superficielle de l'extrémité soudée (3a) du goujon, caractérisé par la combinaison des moyens suivants : éliminer le cordon de soudure (6) avec un outil de fraisage (7) à plusieurs tranchants, centré sur le goujon soudé (3), et soumettre le goujon soudé (3) à une sollicitation de traction le long de son axe, suffisante pour obtenir un étirage à froid.

2. Dispositif destiné à enlever un cordon de soudure pour le procédé selon la revendication 1, comportant un corps (8) présentant à une extrémité une tige de fixation (9) assurant l'assemblage à un mécanisme de rotation, et à l'autre extrémité un évidement central, axial (10), ainsi que plusieurs outils de tour (12) disposés symétriquement autour de l'évidement (10), caractérisé en ce que les outils de tour (12) sont situés sous un angle de 75° par rapport à l'axe de rotation, présentent à leur extrémité interne un bord essentiellement parallèle à l'axe de rotation et un bord antérieur (13) arrondi permettant d'enlever le cordon de soudure (6) par fraisage.

3. Dispositif selon la revendication 2, caractérisé en ce que des inserts de diamètre intérieur différent peuvent être montés dans l'évidement qui s'adapte avec un jeu réduit aux goujons de même diamètre et centre le corps par rapport au goujon.

Fig.1

Fig.2

Fig.3

Fig.4

Fig.5

Fig. 6

Meßuhr

74

µm

65

68

74

70

73

66

60

63

64

71

Hydraulik-Zylinder

61

62

67

69

72

1

3